# EUROPÄISCHE PATENTANMELDUNG

(11) **EP 4 742 212 A1**
(43) Veröffentlichungstag der Anmeldung: **13.05.2026**
(21) Anmeldenummer: 24211679.6
(22) Anmeldetag: 08.11.2024
(51) Int. Cl.: G08G 1/16, G08G 1/0967

(54) **VERFAHREN FÜR DAS ASSISTIERTE FAHREN UND VORRICHTUNG FÜR DAS ASSISTIERTE FAHREN SOWIE FAHRZEUG**

(71) Anmelder: VOLKSWAGEN AG, 38440 Wolfsburg (DE)
(72) Erfinder: Kube, Roland, 38179 Schwülper (DE)

(57) **Zusammenfassung**

Die Erfindung betrifft ein Verfahren für das assistierte Fahren, umfassend die Schritte:
- Bereitstellen (S1) mindestens einer Information (1) über mindestens eine veränderte Fahrspur (F1), wobei die mindestens eine Information (1) mindestens eine Stützstelle (11, 12) entlang der mindestens einen veränderten Fahrspur (F1) aufweist,
- Verifizieren (S3) mindestens einer Fahrspurmarkierung (M1, M4) in Abhängigkeit der bereitgestellten mindestens einen Information (1), wobei die mindestens eine Fahrspurmarkierung (M1, M4) beim Befahren der mindestens einen veränderten Fahrspur (F1) von mindestens einem Fahrzeug (200) detektiert wird,
und eine Vorrichtung (100) für das assistierte Fahren sowie ein Fahrzeug (200).

## Beschreibung

Die Erfindung betrifft ein Verfahren für das assistierte Fahren und eine Vorrichtung für das assistierte Fahren sowie ein Fahrzeug mit mindestens einer entsprechenden Vorrichtung.

Moderne Fahrzeuge sind zunehmend mit Fahrerassistenzfunktionen ausgestattet. Solche Fahrerassistenzfunktionen sind z.B. als Adaptive-Cruise-Control-Funktion, Lane-Assist-Funktion oder Travel-Assist-Funktion bekannt. Die Fahrerassistenzfunktionen können z.B. durch bildbasierte Detektion von Fahrspurmarkierungen den Fahrer beim Fahren in einer Fahrspur durch Warnsignale oder sogar Lenkeingriffe assistieren.

Allerdings werden die Fahrspuren im Straßenverkehr in der Regel temporär verändert, wenn das Fahrzeug z.B. um ein Hindernis wie eine Baustelle herumgeleitet werden soll. Die veränderte Fahrspur beinhaltet häufig scharfe Kurven und Spurverengungen, weshalb das Fahren in der veränderten Fahrspur eine erhöhte Aufmerksamkeit von einem Fahrer erfordert. Da die veränderte Fahrspur in der Regel lediglich durch temporär aufgebrachte, gelbe Fahrspurmarkierungen markiert wird, die sich mit weißen Fahrspurmarkierungen vermischen können, ist die Detektion von Fahrspurmarkierungen durch die eingangs erwähnten Fahrerassistenzfunktionen erschwert. Diese Umstände beeinträchtigen daher die Sicherheit beim assistierten Fahren.

Es stellt sich das technische Problem, ein Verfahren für das assistierte Fahren und eine Vorrichtung für das assistierte Fahren sowie ein Fahrzeug zu schaffen, welche eine Sicherheit beim assistieren Fahren verbessern.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren für das assistierte Fahren, umfassend die Schritte:
- Bereitstellen mindestens einer Information über mindestens eine veränderte Fahrspur, wobei die mindestens eine Information mindestens eine Stützstelle entlang der mindestens einen veränderten Fahrspur aufweist,
- Verifizieren mindestens einer Fahrspurmarkierung in Abhängigkeit der bereitgestellten mindestens einen Information, wobei die mindestens eine Fahrspurmarkierung beim Befahren der mindestens einen veränderten Fahrspur von mindestens einem Fahrzeug detektiert wird.

Weiter vorgeschlagen wird eine Vorrichtung für das assistierte Fahren, wobei die Vorrichtung dazu ausgebildet ist, einen oder mehrere Schritte des Verfahrens oder ein Verfahren gemäß einer in dieser Offenbarung beschriebenen Ausführungsform auszuführen. Die Vorrichtung kann z.B. als ein Mikroprozessor ausgebildet sein oder einen solchen umfassen.

Weiter vorgeschlagen wird ein Fahrzeug, umfassend mindestens eine Vorrichtung gemäß einer in dieser Offenbarung beschriebenen Ausführungsform. Das Fahrzeug kann z.B. als ein PKW oder LKW ausgebildet sein.

Die im Rahmen dieser Offenbarung für das Verfahren erläuterten technischen Effekte und Vorteile treffen selbstverständlich auch für die Vorrichtung und das Fahrzeug zu und umgekehrt.

Das Verfahren hat den Vorteil, dass die detektierte Fahrspurmarkierung durch die bereitgestellte Information verifiziert werden kann. Dies verbessert die Sicherheit beim assistierten Fahren. Insbesondere kann durch das Verifizieren sichergestellt werden, dass die detektierte Fahrspurmarkierung eine für die veränderte Fahrspur relevante Fahrspurmarkierung ist.

Die veränderte Fahrspur kann einen Verlauf aufweisen, der z.B. gegenüber einem Verlauf einer ursprünglichen Fahrspur verändert ist. Beispielsweise kann die Fahrspur einen veränderten Verlauf aufweisen, um das Fahrzeug um eine Baustelle herumzuleiten. Die veränderte Fahrspur kann z.B. durch gelbe Fahrspurmarkierungen auf einer Fahrbahn markiert sein. Die veränderte Fahrspur kann einen gekrümmten Verlauf aufweisen. Beispielsweise kann die veränderte Fahrspur einen S-förmig gekrümmten Verlauf aufweisen. Die veränderte Fahrspur kann ein Segment oder mehrere Segmente, insbesondere Kurvensegmente und/oder geradlinige Segmente, aufweisen. Das Kurvensegment kann z.B. ein Klothoidensegment sein.

Das Bereitstellen der Information kann z.B. mit Hilfe einer externen Einrichtung erfolgen. Beispielsweise kann die mindestens eine Stützstelle durch einen Menschen ermittelt werden und in einer Datenbank der externen Einrichtung bereitgestellt werden. Dies wird im Folgenden noch näher erläutert. Das Bereitstellen der Information erfolgt insbesondere, bevor das mindestens eine Fahrzeug die veränderte Fahrspur befährt und/oder die mindestens eine Fahrspurmarkierung detektiert wird, sodass das Verifizieren der detektieren Fahrspurmarkierung unmittelbar beim Befahren der veränderten Fahrspur erfolgen kann.

Die Information kann z.B. Teil mindestens einer "Decentralized Environment Notification Message" (DENM) und/oder mindestens einer "Infrastructure-to-Vehicle-lnformation" (IVI) Nachricht sein. Die Information kann ferner eine Anzahl der veränderten Fahrspuren und/oder deren Anordnung aufweisen. Auch kann die Information mindestens eine Beschaffenheit der mindestens einen veränderten Fahrspur aufweisen, z.B. eine Art der Fahrspurmarkierungen oder eine Beschädigung der Fahrbahn. Denn auch die Beschaffenheit der veränderten Fahrspur hat einen wesentlichen Einfluss auf die Sicherheit, mit welcher die veränderte Fahrspur befahren werden kann. Die Information, insbesondere die mindestens eine Stützstelle, kann auf ein Referenzkoordinatensystem bezogen sein.

Das Referenzkoordinatensystem kann ein kartesisches Koordinatensystem sein. Das Referenzkoordinatensystem kann ortsfest sein. Das Referenzkoordinatensystem kann eine Längsachse, Querachse und Hochachse aufweisen. Die Längsachse kann in einer Fahrtrichtung des mindestens einen Fahrzeugs orientiert sein. Die Richtung, in der die Längsachse orientiert ist, kann auch als longitudinale Richtung bezeichnet werden. Die Querachse kann orthogonal zu der Längsachse und der Hochachse orientiert sein. Die Richtung, in der die Querachse orientiert ist, kann auch als laterale Richtung bezeichnet werden. Die Hochachse kann orthogonal zu der Längsachse und der Querachse orientiert sein. Die Hochachse kann entgegen einer Orientierung der Schwerkraft orientiert sein. Die Richtung, in der die Hochachse orientiert ist, kann auch als vertikale Richtung bezeichnet werden.

Die mindestens eine Stützstelle ist/sind insbesondere als Koordinate(n) ausgebildet, insbesondere in Bezug auf das zuvor erläuterte Referenzkoordinatensystem. Die mindestens eine Stützstelle kann z.B. in einer Mitte oder an einem Rand der veränderten Fahrspur in lateraler Richtung positioniert sein. Beispielsweise kann die mindestens eine Stützstelle an der Position einer tatsächlichen Fahrspurmarkierung der veränderten Fahrspurt positioniert sein. Selbstverständlich kann die Information eine Vielzahl von Stützstellen umfassen. Beispielsweise kann eine erste Stützstelle am Beginn der veränderten Fahrspur in longitudinaler Richtung positioniert sein. Mindestens eine weitere Stützstelle kann zu der ersten Stützstelle versetzt positioniert sein, z.B. entlang eines Verlaufs der veränderten Fahrspur oder entlang der Fahrspurmarkierung der veränderten Fahrspur. Die weitere Stützstelle kann insbesondere in longitudinaler Richtung und in lateraler Richtung zu der ersten Stützstelle versetzt sein. Die weitere Stützstelle kann weiter insbesondere in vertikaler Richtung zu der ersten Stützstelle versetzt sein, z.B. aufgrund eines Höhenunterschieds entlang der veränderten Fahrspur.

Die Vorrichtung und/oder das Fahrzeug kann/können dazu ausgebildet sein, die mindestens eine Fahrspurmarkierung mittels einer Bilderfassungseinrichtung wie z.B. einer Kamera zu erfassen und/oder die mindestens eine Fahrspurmarkierung mittels einer Detektionseinrichtung zu detektieren, z.B. durch ein Verfahren des maschinellen Lernens. Die mindestens eine Fahrspurmarkierung kann z.B. während des Befahrens der veränderten Fahrspur erfasst, detektiert werden und verifiziert werden. Das Verfahren kann optional die Schritte umfassen: Erfassen der mindestens einen Fahrspurmarkierung und/oder Detektieren der mindestens einen Fahrspurmarkierung. Aufgrund der eingangs beschriebenen Problematik temporär veränderter Fahrspuren können beispielsweise gleichzeitig weiße und gelbe Fahrspurmarkierungen erfasst und detektiert werden, wobei durch das Verifizieren zwischen relevanten und nicht relevanten Fahrspurmarkierungen unterschieden werden kann.

Das Verifizieren kann erfolgen, indem die mindestens eine Information als Referenz für die detektierte Fahrbahnmarkierung genutzt wird. Beispielsweise kann eine Position der detektierten Fahrspurmarkierung mit einer Position der Stützstelle abgeglichen werden. Die detektierte Fahrspurmarkierung kann z.B. verifiziert sein, wenn die Position der detektierten Fahrspurmarkierung um nicht mehr als einen vorbekannten Schwellenwert von der Position der Stützstelle abweicht. Aber auch andere Bestandteile der bereitgestellten Information können für das Verifizieren genutzt werden. Dies wird im Folgenden noch näher erläutert.

Ein Ergebnis des Verifizierens kann z.B. umfassen, dass die mindestens eine detektierte Fahrspurmarkierung freigegeben wird und/oder dass die mindestens eine detektierte Fahrspurmarkierung verworfen wird. Insbesondere kann eine detektierte erste Fahrspurmarkungen (z.B. eine gelbe Fahrspurmarkierung) als relevant klassifiziert werden und daher freigegeben werden, während eine - z.B. gleichzeitig - detektierte weitere Fahrspurmarkierung (z.B. eine weiße Fahrspurmarkierung) als nicht relevant klassifiziert wird und daher verworfen wird.

Insbesondere wird das Verifizieren der mindestens einen detektierten Fahrspurmarkierung von der Vorrichtung und/oder dem mindestens einen Fahrzeug ausgeführt. Auf diese Weise können fahrzeug- oder vorrichtungsinterne Rechenkapazitäten für das Verifizieren genutzt werden.

Weiter kann die bereitgestellte mindestens eine Information eine originäre Referenz ersetzen, die z.B. für das Verifizieren der detektierten Fahrbahnmarkierung originär verwendet wird. Die originäre Referenz kann z.B. ein Satellitenbild sein, auf welchem eine Fahrspurmarkierung gezeigt ist. Die originäre Referenz kann nämlich veraltet sein und eine Fahrspurmarkierung zeigen, die nicht mehr aktuell ist. Durch das Ersetzen kann verhindert werden, dass diese veraltete Referenz für das Verifizieren genutzt wird.

In einer Ausführungsform weist die bereitgestellte mindestens eine Information ferner mindestens eine Fahrspurbreite der mindestens einen veränderten Fahrspur auf. Auf diese Weise kann die mindestens eine detektierte Fahrspurmarkierung zusätzlich in Abhängigkeit der mindestens einen Fahrspurbreite verifiziert werden. Denn die Fahrspurbreite beeinflusst, wo die Fahrspurmarkierungen tatsächlich positioniert sind. Die Fahrspurbreite kann z.B. ein Abstand zwischen zwei Fahrspurmarkierungen der veränderten Fahrspur sein. Die Fahrspurbreite kann z.B. eine Breite der veränderten Fahrspur an der Stützstelle sein.

In einer Ausführungsform wird die mindestens eine Information von mindestens einer externen Einrichtung an das mindestens eine Fahrzeug übertragen, wobei die mindestens eine Information durch das mindestens eine Fahrzeug empfangen wird. Auf diese Weise kann die Information unmittelbar vor Befahren der veränderten Fahrspur bereitgestellt werden. Die externe Einrichtung kann mindestens einen Mikrocontroller und/oder mindestens ein aktives Kommunikationselement aufweisen. Das aktive Kommunikationselement kann z.B. ein Funksender oder eine andere Kommunikationsschnittstelle sein. Die externe Einrichtung kann Teil einer Verkehrsinfrastruktur sein. Insbesondere kann die externe Einrichtung an einem Baustellenfahrzeug angeordnet sein, welches z.B. in der Umgebung der veränderten Fahrspur parkt. Alternativ kann die externe Einrichtung auch ein Server sein, welcher die Information bereitstellt und z.B. über das Internet an das Fahrzeug sendet. Das Fahrzeug und/oder die Vorrichtung kann/können einen Mikrocontroller und/oder ein passives Kommunikationselement umfassen. Das passive Kommunikationselement kann z.B. ein Funkempfänger oder eine andere Kommunikationsschnittstelle sein. Für das Empfangen der Information kann das Fahrzeug oder die Vorrichtung z.B. das passive Kommunikationselement nutzen, um die Information zu empfangen. Insbesondere kann die bereitgestellte mindestens eine Information lokal übertragen werden, wobei die lokale Übertragung z.B. eine Reichweite von bis zu 100 Metern, 500 Metern, 1000 Metern oder 2000 Metern aufweist.

In einer Ausführungsform wird das Übertragen der mindestens einen Information durch vorheriges Übertragen mindestens einer ersten Nachricht angekündigt, wobei die erste Nachricht auf mindestens eine weitere Nachricht verweist, wobei die mindestens eine Information Teil der mindestens einen weiteren Nachricht ist. Auf diese Weise kann das Bereitstellen der Information robuster gestaltet werden. Insbesondere kann die Vorrichtung auf das Empfangen der Information vorbereitet werden. Beispielsweise kann die Vorrichtung einen Arbeitsspeicher aufweisen, welcher vor dem Empfangen der Information gelöscht oder formatiert werden soll. Insbesondere benötigt die erste Nachricht weniger Speicherplatz als die weitere Nachricht. Die erste Nachricht kann z.B. eine DENM-Nachricht sein, da DENM ein besonders kompaktes Nachrichtenformat ist und die erste Nachricht somit schnell und sicher übertragen werden kann. Die weitere Nachricht kann z.B. eine IVI-Nachricht sein, da IVI ein besonders umfangreiches Nachrichtenformat ist, sodass die Information auch dann problemlos übertragen werden kann, wenn die Information z.B. eine Vielzahl von Stützstellen aufweist. Der Verweis auf die weitere Nachricht kann eine Ziffernfolge sein. Der Verweis kann z.B. Teil der ersten und der weiteren Nachricht sein, um eine Zuordnung der Nachrichten zueinander zu ermöglichen. Die externe Einrichtung kann dazu ausgebildet sein, die erste Nachricht und die weitere Nachricht auszusenden. Die Vorrichtung und/oder das Fahrzeug kann/können dazu ausgebildet sein, die erste Nachricht und die weitere Nachricht zu empfangen.

In einer Ausführungsform wird in Abhängigkeit der bereitgestellten Information und/oder in Abhängigkeit eines Ergebnisses des Verifizierens mindestens eine Assistenzgröße ermittelt. Auf diese Weise kann das Befahren der veränderten Fahrspur sicherer gestaltetet werden. Das Ermitteln der Assistenzgröße kann erfolgen, indem die mindestens eine Information und/oder das Ergebnis des Verifizierens der mindestens einen Assistenzgröße zugeordnet wird. Eine Zuordnungsvorschrift kann vorbekannt sein. Beispielsweise kann die Zuordnungsvorschrift aus Versuchen oder Simulationen bekannt sein. Die ermittelte Assistenzgröße kann mindestens einen der folgenden Parameter aufweisen:
- eine Soll-Bewegung des mindestens einen Fahrzeugs zum assistierten Fahren in der mindestens einen veränderten Fahrspur, insbesondere eine Soll-Beschleunigung und/oder eine Soll-Geschwindigkeit und/oder ein Soll-Lenkwinkel und/oder eine Soll-Lenkwinkelgeschwindigkeit,
- eine Soll-Fahrspur für das mindestens eine Fahrzeug, wenn z.B. mehrere veränderte Fahrspuren verfügbar sind,
- ein Verlauf der mindestens einen veränderten Fahrspur.

Insbesondere wird die ermittelte mindestens eine Assistenzgröße eingestellt. Auf diese Weise kann die ermittelte Assistenzgröße zum assistieren Fahren eingesetzt werden. Das Einstellen der ermittelten Assistenzgröße kann z.B. mit Hilfe der Vorrichtung erfolgen. Die Vorrichtung kann z.B. einen Aktor zum Einstellen der Assistenzgröße umfassen. Die Assistenzgröße kann insbesondere eingestellt werden, indem eine Ist-Größe des mindestens einen Fahrzeugs - z.B. eine Ist-Geschwindigkeit - derart verändert wird, dass die Ist-Größe um nicht mehr als einen vorbekannten weiteren Schwellenwert von der Assistenzgröße abweicht. Die Assistenzgröße kann aber auch eingestellt werden, indem die Assistenzgröße als Information ausgegeben wird. Beispielsweise kann die Assistenzgröße als Warnung bzw. Empfehlung an den Fahrer ausgegeben werden. Weiter beispielsweise kann die Assistenzgröße als der Verlauf der mindestens einen veränderten Fahrspur ausgegeben werden. Das Fahrzeug und/oder die Vorrichtung kann/können für die Ausgabe der Assistenzgröße mindestens eine Anzeigeeinrichtung umfassen, z.B. einen Bildschirm und/oder ein frei-programmierbares Kombiinstrument.

In einer Ausführungsform erfolgt das Verifizieren in Abhängigkeit zumindest einer der folgenden fahrzeugspezifischen Größen:
- mindestens eine Breite, Höhe und/oder Länge des mindestens einen Fahrzeugs,
- mindestens eine aktuelle Fahrspur des mindestens einen Fahrzeugs,
- mindestens ein Ist-Ort des mindestens einen Fahrzeugs,
- mindestens eine Ist-Bewegung des mindestens einen Fahrzeugs
- mindestens eine Ausstattung des mindestens einen Fahrzeugs,
- mindestens eine geplante Routenführung des mindestens einen Fahrzeugs.

Auf diese Weise ist das Verifizieren robuster. Denn die genannten fahrzeugspezifischen Größen haben einen wesentlichen Einfluss darauf, wie die veränderte Fahrspur befahren wird und welche Fahrspurmarkierungen verifiziert werden müssen. Die fahrzeugspezifischen Größen können vorbekannt sein.

Insbesondere erfolgt das Ermitteln der mindestens einen Assistenzgröße in Abhängigkeit zumindest einer der fahrzeugspezifischen Größen. Beispielsweise kann/können die Breite, Höhe und/oder Länge des Fahrzeugs beeinflussen, welche von mehreren veränderten Fahrspuren am geeignetsten zum Befahren ist. Weiter beispielsweise kann die veränderte Fahrspur zu eng für das Fahrzeug sein. Insbesondere kann eine Breite des Fahrzeugs mit einer Fahrspurbreite der veränderten Fahrspur abgeglichen werden. Weiter beispielsweise kann ein Spurwechsel von der aktuellen Fahrspur in die veränderte Fahrspur nötig sein, z.B. weil die aktuelle Fahrspur endet. Weiter beispielsweise kann eine Ausstattung des Fahrzeugs, wie z.B. eine nicht serienmäßige Assistenzfunktion, besser geeignet sein, um eine linke veränderte Fahrspur zu befahren als eine rechte veränderte Fahrspur. Weiter beispielsweise kann es die geplante Routenführung erforderlich machen, eine linke veränderte Fahrspur anstatt einer rechten veränderten Fahrspur zu befahren.

In einer Ausführungsform wird in Abhängigkeit der mindestens einen Information mindestens eine Krümmung der mindestens einen veränderten Fahrspur bestimmt. Auf diese Weise kann z.B. ein gekrümmter Verlauf der veränderten Fahrspur beim Verifizieren der detektierten Fahrspurmarkierung und/oder beim Ermitteln der mindestens einen Assistenzgröße berücksichtigt werden. Die Krümmung kann die Krümmung mindestens eines Segments der veränderten Fahrspur sein. Es ist auch möglich, dass die Krümmung die Krümmung einer Fahrbahnoberfläche der veränderten Fahrspur ist. Die Krümmung kann daher in einer horizontalen Ebene (welche z.B. durch die Längs- und Querachse aufgespannt werden kann) und/oder in einer vertikalen Ebene (welche z.B. durch die Längs- und Hochachse oder die Quer- und Hochachse aufgespannt werden kann) orientiert sein. Die Krümmung kann z.B. mit Hilfe eines sogenannten Curve-Fittings bestimmt werden. Das Curve-Fitting kann z.B. eine polynomiale Regression umfassen. Das Bestimmen der Krümmung kann ein Bestimmen des Verlaufs der veränderten Fahrspur umfassen. Zum Bestimmen der Krümmung kann z.B. die Vielzahl von Stützstellen durch mindestens eine Funktion, z.B. eine Polynomfunktion, miteinander verbunden werden. Die Funktion kann z.B. den Verlauf der veränderten Fahrspur repräsentieren. Beispielsweise ist die Krümmung eine örtliche Ableitung der Funktion. Insbesondere kann die Krümmung an einem oder mehreren Punkten entlang der veränderten Fahrspur bestimmt werden.

In einer Ausführungsform wird die bereitgestellte mindestens eine Information durch mindestens ein weiteres Fahrzeug überprüft, wobei das mindestens eine weitere Fahrzeug die veränderte Fahrspur befährt. Auf diese Weise kann die Korrektheit der bereitgestellten Information bestätigt werden. Das weitere Fahrzeug kann z.B. eine Ausführungsform der in dieser Offenbarung beschriebenen Vorrichtung aufweisen. Das weitere Fahrzeug kann z.B. Mittel zum Überprüfen der bereitgestellten mindestens einen Information aufweisen. Das weitere Fahrzeug kann beispielsweise eine Positionsbestimmungseinrichtung aufweisen, welche eine Position der mindestens einen Stützstelle bestimmen kann, um die Positionen dann zu überprüfen.

Die Erfindung wird anhand von Ausführungsbeispielen näher erläutert. Die Figuren zeigen:
- Fig. 1: eine schematische Darstellung einer Ausführungsform eines Fahrzeugs mit einer Vorrichtung für das assistierte Fahren und
- Fig. 2: eine schematische Darstellung einer weiteren Ausführungsform eines Fahrzeugs mit einer Vorrichtung für das assistierte Fahren.

Nachfolgend bezeichnen gleiche Bezugszeichen Elemente mit gleichen technischen Merkmalen.

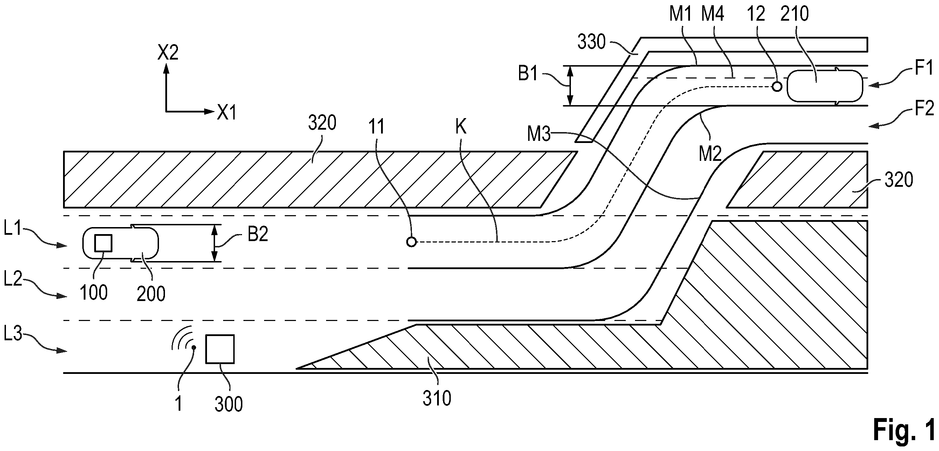

Fig. 1 zeigt eine schematische Darstellung einer Ausführungsform eines Fahrzeugs 200 mit einer Vorrichtung 100 für das assistierte Fahren in einer beispielhaften Verkehrssituation.

In der gezeigten Verkehrssituation fährt das Fahrzeug 200 auf einer Fernstraße in einer Fahrspur L1, wobei die Fernstraße grundsätzlich drei Fahrspuren L1, L2, L3 aufweist. Die Fahrspuren L1, L2, L3 sind durch Fahrspurmarkierung (in Fig. 1 durch gestrichelte Linien gekennzeichnet) begrenzt.

Das Fahrzeug 200 ist dazu ausgebildet, mittels der Vorrichtung 100 mit einer externen Einrichtung 300 zu kommunizieren. Die externe Einrichtung 300 ist ein Baustellenfahrzeug, welches in der Fahrspur L3 geparkt ist und eine Information 1 lokal in Form einer Kombination von "DENM"-Nachricht und "IVI"-Nachricht an das sich annähernde Fahrzeug 200 aussenden kann. Selbstverständlich kann auch die Information 1 auch nur als "DENM"-Nachricht oder nur als "IVI"-Nachricht ausgesendet werden. Die Kommunikation zwischen der externen Einrichtung 300 und dem Fahrzeug 200 erfolgt insbesondere nahezu in Echtzeit. Die externe Einrichtung 300 hat z.B. eine Reichweite von bis zu 1000 Metern, um die Information 1 bereits bis zu einen Kilometer vor Beginn einer Baustelle 310 an das Fahrzeug 200 übertragen zu können. Die Baustelle 310 ist durch eine Fläche mit Schraffur gekennzeichnet.

Ferner weist die externe Einrichtung 300 z.B. durch eine Anzeigetafel (nicht dargestellt) darauf hin, dass die Fahrspur L3 aufgrund der Baustelle 310 endet und sich auf der Fahrspur L3 nähernde Fahrzeuge (nicht dargestellt) daher einen Spurwechsel einleiten müssen.

Die verbleibenden Fahrspuren L1, L2 gehen in die veränderten Fahrspuren F1, F2 über. Hierbei kreuzen die veränderten Fahrspuren F1, F2 durch eine S-Kurve (in Fig. 1 durch Punkte gekennzeichnet) mit einer Krümmung K einen Mittelstreifen 320 (ebenfalls schraffiert gekennzeichnet) der Fernstraße. Denn die veränderten Fahrspuren F1, F2 dienen als Umfahrung der Baustelle 310. Die veränderten Fahrspuren F1, F2 scheren nach Kreuzen des Mittelstreifens 320 in einen Bereich einer ursprünglichen Fahrbahn des Gegenverkehrs (nicht dargestellt) ein, welcher durch eine Betonbarriere 330 vom Gegenverkehr abgegrenzt ist, wobei in dem Bereich eine originäre Fahrspurmarkierung M4 (durch gestrichelte Linie gekennzeichnet) verblieben ist. Diese originäre Fahrspurmarkierung M4 ist für die veränderten Fahrspuren F1, F2 jedoch nicht relevant, kann aber von den Fahrzeugen 200, 210 fälschlicherweise als Fahrspurmarkierung detektiert werden. Die veränderten Fahrspuren F1, F2 sind hingegen durch temporäre Fahrspurmarkierungen M1, M2, M3 begrenzt. Die temporären Fahrspurmarkierungen M1, M2, M3 sind in Fig. 1 durch durchgezogene Linien gekennzeichnet. Diese können ebenfalls von den Fahrzeugen 200, 210 als Fahrspurmarkierung detektiert werden. Eine Idee der Erfindung ist es, die nicht relevante originäre Fahrspurmarkierung M4 von den relevanten Fahrspurmarkierungen M1, M2, M3 unterscheiden zu können, indem die bereitgestellte Information 1 zum Verifizieren der detektierten Fahrspurmarkierungen M1, M2, M3, M4 genutzt wird.

Zum besseren räumlichen Verständnis ist in Fig. 1 ein Referenzkoordinatensystem mit einer Längsachse X1 und einer Querachse X2 dargestellt. Die Längsachse X1 ist in einer Fahrtrichtung des Fahrzeugs 200 orientiert und zeigt daher in eine longitudinale Richtung. Die Querachse X2 ist orthogonal zur der Längsachse X1 orientiert und zeigt daher in eine laterale Richtung.

Die von der externen Einrichtung 300 ausgesandte Information 1 weist eine erste Stützstelle 11 und eine weitere Stützstelle 12 auf. Die Stützstellen 11, 12 sind in Fig. 1 durch ausgefüllte Kreise gekennzeichnet und markieren einen Beginn und ein Ende der S-Kurve mit der Krümmung K. Die Stützstellen 11, 12 können z.B. von einem Messingenieur vermessen worden sein und in einer Datenbank (nicht dargestellt) der externen Einrichtung 300 hinterlegt sein. Die erste Stützstelle 11 kann eine Koordinate in dem Referenzkoordinatensystem sein. Die Stützstelle 11 markiert eine Position einer Mitte der veränderten Fahrspur F1 am Beginn der S-Kurve. Die weitere Stützstelle 12 kann ebenfalls eine Koordinate in dem Referenzkoordinatensystem sein. Die Stützstelle 12 markiert eine Position einer Mitte der veränderten Fahrspur F1 am Ende der S-Kurve. Die weitere Stützstelle 12 ist daher zu der ersten Stützstelle 11 in lateraler und longitudinaler Richtung versetzt. Die Information 1 kann den ortsfesten Ursprung des Referenzkoordinatensystems ebenfalls aufweisen.

Die Information 1 weist ferner eine Fahrspurbreite B1 der Fahrspur F1 auf, da die Fahrspur F1 gegenüber einer Breite der Fahrspuren L1, L2, L3 verengt ist. Die Fahrspurbreite B1 kann mit einer Breite B2 des Fahrzeugs 200 abgeglichen werden, um zu ermitteln, ob das Fahrzeug 200 die Fahrspur F1 befahren kann.

Die Fahrspur F1 wird ferner von einem weiteren Fahrzeug 210 mit einer baugleichen Vorrichtung 100 befahren. Das weitere Fahrzeug 210 hat die Information 1 bereits erhalten und überprüft beim Befahren der Fahrspur F1 die Validität der Information 1, z.B. indem das weitere Fahrzeug 210 mittels einer Positionsbestimmungseinrichtung (nicht dargestellt) die Positionen der Stützstellen 11, 12 selbst bestimmt und zur Überprüfung nutzt.

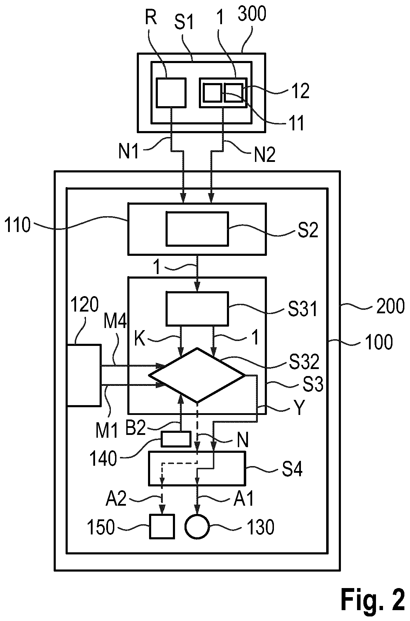

Fig 2. zeigt eine schematische Darstellung einer weiteren Ausführungsform eines Fahrzeugs 200 mit einer Vorrichtung 100 für das assistierte Fahren.

Die in Fig. 1 und Fig. 2 gezeigten Vorrichtungen 100 sind jeweils dazu ausgebildet, ein Verfahren für das assistierte Fahren gemäß einer in dieser Offenbarung beschriebenen Ausführungsform auszuführen. Das in Fig. 2 gezeigte Verfahren umfasst die im Folgenden erläuterten Schritte:
In einem Schritt S1 wird eine Information 1 über mindestens eine veränderte Fahrspur F1 bereitgestellt. Die Information 1 weist eine Vielzahl von Stützstellen 11, 12 auf (vgl. Fig. 1). Die Stützstellen 11, 12 können z.B. in einer Datenbank einer externen Vorrichtung 300 hinterlegt sein.

Die externe Einrichtung 300 ist dazu ausgebildet, eine Übertragung der Information 1 an das Fahrzeug 200 durch eine erste als DENM ausgebildete Nachricht N1 anzukündigen. Die erste Nachricht N1 dient dazu, die Vorrichtung 100 oder eine Software der Vorrichtung 100 auf einen Empfang einer weiteren Nachricht N2 vorzubereiten.

Die erste Nachricht N1 verweist durch z.B. eine Ziffernfolge R auf die weitere Nachricht N2. Die Ziffernfolge R kann z.B. einen Speicherbedarf der weiteren Nachricht N2 repräsentierten. Die Ziffernfolge R kann z.B. in einem sogenannten Road Works Container der ersten Nachricht N1 enthalten sein. Beispielsweise kann nach Empfang der ersten Nachricht N1 ein Arbeitsspeicher (nicht dargestellt) der Vorrichtung 100 geleert werden, um die weitere Nachricht N2 zwischenspeichern zu können. Denn die weitere Nachricht N2 kann z.B. als speicherintensive "IVI"-Nachricht ausgebildet sein, wobei die Information 1 neben weiteren Informationen (nicht dargestellt) ein Teil der weiteren Nachricht N2 ist.

Die weitere Nachricht N2 kann als weitere Informationen z.B. Daten aufweisen, die für die Umgebung des Fahrzeugs 200 und die Verkehrssituation relevant sind. Die weiteren Informationen können z.B. Daten über Straßenschilder, Verkehrsvorschriften, Warnungen und/oder Geschwindigkeitsbegrenzungen in verschiedenen Abschnitten der veränderten Fahrspuren F1, F2 sein.

In einem Schritt S2 wird die Information 1 von der externen Einrichtung 300 an das Fahrzeug 200 übertragen und über eine drahtlose Kommunikationsschnittstelle 110 des Fahrzeugs 200 empfangen. Die bereitgestellte Information 1 kann z.B. in dem zuvor erwähnten Arbeitsspeicher (nicht dargestellt) der Vorrichtung 100 zwischengespeichert werden.

Beim Befahren der veränderten Fahrspur F1 können die Fahrspurmarkierungen M1, M4 von dem Fahrzeug 200 detektiert werden (vgl. Fig. 1). Hierzu kann die Vorrichtung 100 z.B. eine Bilderfassungseinrichtung (nicht dargestellt) und eine als Mikrocontroller ausgebildete Detektionseinrichtung 120 aufweisen.

In einem Schritt S3 werden die detektierten Fahrspurmarkierungen M1, M4 verifiziert. Der Schritt S3 umfasst mehrere Teilschritte S31, S32, die im Folgenden näher erläutert werden.

In einem Teilschritt S31 wird in Abhängigkeit der Information 1 eine Krümmung K der veränderten Fahrspur F1 bestimmt. Die Krümmung K wird z.B. mit Hilfe eines Curve-Fittings bestimmt, welches durch eine Polynomfunktion die Stützstellen 11 und 12 verbindet, wobei die Krümmung K die örtliche Ableitung der Polynomfunktion sein kann. Die Krümmung K kann dazu genutzt werden, die Fahrspurmarkierung M1 besser von der Fahrspurmarkierung M4 zu unterscheiden. Denn die Krümmung K der veränderten Fahrspur F1 sollte im Wesentlichen einer Krümmung der detektierten Fahrspurmarkierungen M1 entsprechen, während die geradlinige Fahrspurmarkierung M4 gar keine Krümmung aufweist.

Ferner wird eine fahrzeugspezifische Größe z.B. eine Breite B2 des Fahrzeugs 200 für das Verifizieren der Fahrspurmarkierungen M1, M4 bereitgestellt. Die Breite B2 kann z.B. in einem Speicher 140 der Vorrichtung 100 gespeichert sein und für die Verifikation ausgelesen werden. Die Breite B2 des Fahrzeugs 200 kann als eine zusätzliche Referenz für das Verifizieren der Fahrspurmarkierungen M1, M4 genutzt werden.

In einem Teilschritt S32 erfolgt die Verifikation der Fahrspurmarkierungen M1, M4 in Abhängigkeit der empfangenen Information 1, der zuvor bestimmten Krümmung K und der fahrzeugspezifischen Größe des Fahrzeugs 200.

Die temporäre Fahrspurmarkierung M1 kann z.B. verifiziert werden, indem die durch die Stützstelle 12 angegebene Position der Mitte der Fahrspur F1 (vgl. Fig. 1) mit einer Position der detektierten Fahrspurmarkierung M1 verglichen wird und der Unterschied kleiner als ein vorbekannter Schwellenwert ist. Die Fahrspurmarkierung M1 kann daher als die für die veränderte Fahrspur F1 relevante Fahrspurmarkierung klassifiziert werden. In einem weiteren Vergleich kann z.B. die ebenfalls detektierte originäre Fahrspurmarkierung M4 (vgl. Fig. 1) als für die veränderte Fahrspur F1 nicht relevant klassifiziert und somit verworfen werden, da der zuvor erwähnte Schwellenwert überschritten wird. Durch das Verifizieren kann somit die relevante Fahrspurmarkierung M1 von der nicht relevanten Fahrspurmarkierung M4 unterschieden werden. Das Ergebnis Y des Teilschritts S32 ist daher positiv. Ist hingegen keine Unterscheidung zwischen den detektieren Fahrspurmarkierungen M1, M4 möglich, so ist ein Ergebnis N des Teilschritts S32 negativ.

In einem Schritt S4 wird in Abhängigkeit des Ergebnisses Y eine Assistenzgröße A1 ermittelt. Die Assistenzgröße A1 kann z.B. ein Soll-Lenkwinkel sein, der eingestellt wird, wenn das Ergebnis Y der Verifikation positiv ist. Die Assistenzgröße A1 kann z.B. mit Hilfe eines als Elektromotor ausgebildeten Aktors 130 der Vorrichtung 100 eingestellt werden.

Ist ein Ergebnis N der Verifikation hingegen negativ, so kann eine Assistenzgröße A2 ermittelt werden, welche als eine Warnung an eine als Bildschirm ausgebildete Anzeigeeinrichtung 150 der Vorrichtung 100 ausgegeben wird. Die Warnung kann dem Fahrer des Fahrzeugs 200 mitteilen, dass die Verifikation der detektierten Fahrspurmarkierungen M1, M4 aktuell nicht möglich ist und z.B. die Assistenzgröße A2 aktuell nicht eingestellt werden kann.

### Bezugszeichenliste

- 1: Information
- 11: erste Stützstelle
- 12: weitere Stützstelle
- 100: Vorrichtung
- 110: Kommunikationsschnittstelle
- 120: Detektionseinrichtung
- 130: Aktor
- 140: Speicher
- 150: Anzeigeeinrichtung
- 200: Fahrzeug
- 210: weiteres Fahrzeug
- 300: externe Einrichtung
- 310: Baustelle
- 320: Mittelstreifen
- 330: Betonbarriere
- A1: Assistenzgröße
- A2: weitere Assistenzgröße
- B1: Breite einer veränderten Fahrspur
- B2: Breite eines Fahrzeugs
- F1 und F2: veränderte Fahrspur
- K: Krümmung einer veränderten Fahrspur
- L1 bis L3: Fahrspur
- M1 bis M3: temporäre Fahrspurmarkierung
- M4: originäre Fahrspurmarkierung
- N: negatives Ergebnis der Verifikation
- N1: erste Nachricht
- N2: weitere Nachricht
- R: Ziffernfolge
- S1: Schritt
- S2: Schritt
- S3: Schritt
- S31: Teilschritt
- S32: Teilschritt
- S4: Schritt
- X1: Längsachse
- X2: Querachse
- Y: positives Ergebnis der Verifikation

## Patentansprüche

1. Verfahren für das assistierte Fahren, umfassend die Schritte:
- Bereitstellen (S1) mindestens einer Information (1) über mindestens eine veränderte Fahrspur (F1), wobei die mindestens eine Information (1) mindestens eine Stützstelle (11, 12) entlang der mindestens einen veränderten Fahrspur (F1) aufweist,
- Verifizieren (S3) mindestens einer Fahrspurmarkierung (M1, M4) in Abhängigkeit der bereitgestellten mindestens einen Information (1), wobei die mindestens eine Fahrspurmarkierung (M1, M4) beim Befahren der mindestens einen veränderten Fahrspur (F1) von mindestens einem Fahrzeug (200) detektiert wird.

2. Verfahren nach Anspruch 1, **dadurch gekennzeichnet, dass** die bereitgestellte mindestens eine Information (1) ferner mindestens eine Fahrspurbreite (B1) der mindestens einen veränderten Fahrspur (F1) aufweist.

3. Verfahren nach einem der vorangegangen Ansprüche, **dadurch gekennzeichnet, dass** die mindestens eine Information (1) von mindestens einer externen Einrichtung (300) an das mindestens eine Fahrzeug (200) übertragen wird, wobei die mindestens eine Information (1) durch das mindestens eine Fahrzeug (200) empfangen wird.

4. Verfahren nach Anspruch 3, **dadurch gekennzeichnet, dass** das Übertragen der mindestens einen Information (1) durch vorheriges Übertragen mindestens einer ersten Nachricht (N1) angekündigt wird, wobei die erste Nachricht (N1) auf mindestens eine weitere Nachricht (N2) verweist, wobei die mindestens eine Information (1) Teil der mindestens einen weiteren Nachricht (N2) ist.

5. Verfahren nach einem der vorangegangenen Ansprüche, **dadurch gekennzeichnet, dass** in Abhängigkeit der bereitgestellten Information (1) und/oder in Abhängigkeit eines Ergebnisses (Y, N) des Verifizierens (S3) mindestens eine Assistenzgröße (A1, A2) ermittelt wird.

6. Verfahren nach einem der vorangegangenen Ansprüche, **dadurch gekennzeichnet, dass** das Verifizieren (S3) zusätzlich in Abhängigkeit zumindest einer der folgenden fahrzeugspezifischen Größen erfolgt:
- mindestens eine Breite (B2), Höhe und/oder Länge des mindestens einen Fahrzeugs (200),
- mindestens eine aktuelle Fahrspur (L1, L2, L3, F1, F2) des mindestens einen Fahrzeugs (200),
- mindestens ein Ist-Ort des mindestens einen Fahrzeugs (200),
- mindestens eine Ist-Bewegung des mindestens einen Fahrzeugs (200), insbesondere eine Ist-Geschwindigkeit,
- mindestens eine Ausstattung des mindestens einen Fahrzeugs (200), und/oder
- mindestens eine geplante Routenführung des mindestens einen Fahrzeugs (200).

7. Verfahren nach einem der vorangegangenen Ansprüche, **dadurch gekennzeichnet, dass** in Abhängigkeit der mindestens einen Information (1) mindestens eine Krümmung (K) der mindestens einen veränderten Fahrspur (F1) bestimmt wird.

8. Verfahren nach einem der vorangegangenen Ansprüche, **dadurch gekennzeichnet, dass** die bereitgestellte mindestens eine Information (1) durch mindestens ein weiteres Fahrzeug (210) überprüft wird, wenn das mindestens eine weitere Fahrzeug (210) die veränderte Fahrspur (F1) befährt.

9. Vorrichtung (100) für das assistierte Fahren, wobei die Vorrichtung (100) dazu ausgebildet ist, ein Verfahren gemäß einem der Ansprüche 1 bis 8 auszuführen.

10. Fahrzeug (200), umfassend mindestens eine Vorrichtung (100) für das assistierte Fahren nach Anspruch 9.
